# EUROPÄISCHE PATENTSCHRIFT

(11) **EP 3 514 342 B1**
(45) Veröffentlichungstag und Bekanntmachung des Hinweises auf die Patenterteilung: **22.07.2020**
(21) Anmeldenummer: 19152201.0
(22) Anmeldetag: 17.01.2019
(51) Int. Cl.: F01N 3/20

(54) **SCHALLDÄMPFER**
SOUND ABSORBER
AMORTISSEUR DE BRUIT

(30) Priorität: 22.01.2018 DE 102018101254; 26.02.2018 DE 102018104239
(43) Veröffentlichungstag der Anmeldung: 24.07.2019
(73) Patentinhaber: Eberspächer Exhaust Technology GmbH & Co. KG, 66539 Neunkirchen (DE)
(72) Erfinder: Hörr, Micha, 73614 Schorndorf (DE); Klausa, Konrad, 73779 Deizisau (DE)
(74) Vertreter: Ruttensperger Lachnit Trossin Gomoll

(56) Entgegenhaltungen:
- EP-A1- 3 163 038
- EP-A2- 2 955 344
- DE-A1- 2 706 957
- DE-U1- 20 120 470
- US-A1- 2007 261 395

## Beschreibung

Die vorliegende Erfindung betrifft einen Schalldämpfer für eine Abgasanlage einer Brennkraftmaschine, beispielsweise in einem Fahrzeug.

Aus der DE 10 2015 222 088 A1 ist ein Schalldämpfer bekannt, bei welchem eine Abgas in ein Schalldämpfergehäuse und aus dem Schalldämpfergehäuse leitende Abgasrohrgruppe vorgesehen ist. Die Abgasrohrgruppe dieses bekannten Schalldämpfers umfasst ein Eintrittsrohr, welches an einem stromabwärtigen Eintrittsrohrende zu einer in dem Gehäuse gebildeten Expansionskammer offen ist. Ein erstes Austrittsrohr ist mit einem stromaufwärtigen Austrittsrohr-Endbereich durch eine am Eintrittsrohrende gebildete Eintrittsrohröffnung hindurch in das Eintrittsrohr eingeführt und erstreckt sich mit seinem Austrittsrohr-Endbereich im Eintrittsrohr, so dass das Eintrittsrohr im Bereich der Eintrittsrohröffnung über einen zwischen dem Eintrittsrohr und dem ersten Austrittsrohr gebildeten Zwischenraum zur Expansionskammer offen ist. Ein zweites Austrittsrohr ist an seinem im Inneren des Schalldämpfergehäuses liegenden stromaufwärtigen Ende zur Expansionskammer offen. Über das Eintrittsrohr in das Schalldämpfergehäuse eingeleitetes Abgas verlässt das Schalldämpfergehäuse über das erste Austrittsrohr und das zweite Austrittsrohr.

Aus der DE 27 06 957 A1 ist ein Schalldämpfer gemäß dem Oberbegriff des Anspruchs 1 bekannt. Bei diesem bekannten Schalldämpfer ist ein Austrittsrohr zu einer Expansionskammer offen. Ein Eintrittsrohr ist mit einem sich trichterartig verjüngenden Endbereich in das Austrittsrohr in dessen zur Expansionskammer offenes Ende eingeführt. Im Inneren des Schalldämpfergehäuses zweigt von dem Eintrittsrohr ein Resonatorrohr ab, das zu einer Resonatorkammer offen ist.

Es ist die Aufgabe der vorliegenden Erfindung, einen Schalldämpfer für eine Abgasanlage einer Brennkraftmaschine, insbesondere für ein Fahrzeug, vorzusehen, welches bei geringem Druckverlust und geringen Strömungsgeräuschen in einfacher Art und Weise an das für eine Brennkraftmaschine vorzusehende akustische Profil angepasst werden kann.

Erfindungsgemäß wird diese Aufgabe gelöst durch einen Schalldämpfer für eine Abgasanlage einer Brennkraftmaschine, umfassend ein Schalldämpfergehäuse und wenigstens eine Abgasrohrgruppe, wobei die wenigstens eine Abgasrohrgruppe umfasst:
- ein zu einer in dem Schalldämpfergehäuse gebildeten Expansionskammer offenes Austrittsrohr, wobei über die wenigstens eine Abgasrohrgruppe eingeleitetes Abgas das Schalldämpfergehäuse über das Austrittsrohr verlässt,
- ein erstes Eintrittsrohr, wobei das erste Eintrittsrohr einen in das Austrittsrohr eingeführten und in dem Austrittsrohr sich erstreckenden Eintrittsrohr-Endbereich aufweist,
- ein zweites Eintrittsrohr, wobei das zweite Eintrittsrohr zu der Expansionskammer offen ist.

Durch die Anpassung der Länge des in das Austrittsrohr eingeführten Endbereichs des ersten Eintrittsrohrs wird bei Überlagerung der durch die beiden Eintrittsrohre bereitgestellten Abgasströme eine effiziente Anpassung an ein gewünschtes akustisches Verhalten eines derartigen Schalldämpfers möglich. Da im Übergang vom ersten Eintrittsrohr zum Austrittrohr grundsätzlich eine Vergrößerung des Strömungsquerschnitts auftritt, wird eine Zunahme eines zu Strömungsgeräuschen und auch Leistungsverlusten einer Brennkraftmaschine führenden Strömungswiderstandes weitestgehend vermieden.

Zur Ankopplung des Austrittsrohrs an die Expansionskammer wird vorgeschlagen, dass das Austrittsrohr an einem stromaufwärtigen Ende des Austrittsrohrs eine das erste Eintrittsrohr aufnehmende Austrittsrohröffnung aufweist, und dass das Austrittsrohr über einen zwischen dem Austrittsrohr und dem ersten Eintrittsrohr gebildeten Zwischenraum im Bereich der Austrittsrohröffnung zu der Expansionskammer offen ist.

Alternativ oder zusätzlich kann vorgesehen sein, dass
- das Austrittsrohr über wenigstens eine in einer Rohrwandung des Austrittsrohrs vorgesehene Durchtrittsöffnung zu der Expansionskammer offen ist,
   oder/und
- das erste Eintrittsrohr über wenigstens eine in einer Rohrwandung des ersten Eintrittsrohrs vorgesehene Durchtrittsöffnung zu der Expansionskammer offen ist,
   oder/und
- das erste Eintrittsrohr über wenigstens eine in einer Rohrwandung des ersten Eintrittsrohrs vorgesehene Durchtrittsöffnung zu einem zwischen dem Austrittsrohr und dem ersten Eintrittsrohr gebildeten Zwischenraum offen ist.

Um dabei den Austritt von über das erste Eintrittsrohr zugeführtem Abgas in die Expansionskammer zu unterbinden, andererseits aber eine effiziente Einleitung von über das zweite Eintrittsrohr in die Expansionskammer geleitetem Abgas in das Austrittsrohr zu gewährleisten, wird vorgeschlagen, dass in der Rohrwandung eine Mehrzahl von Durchtrittsöffnungen vorgesehen ist, oder/und dass wenigstens eine, vorzugsweise jede Durchtrittsöffnung im Erstreckungsbereich des Eintrittsrohr-Endbereichs vorgesehen ist.

Zur weiteren Beeinflussung des akustischen Verhaltens kann in dem Schalldämpfergehäuse wenigstens eine von der Expansionskammer durch eine Wandung getrennte weitere Kammer vorgesehen sein. Dabei kann in der Wandung wenigstens eine eine Verbindung zwischen der Expansionskammer und der durch die Wandung von dieser getrennten weiteren Kammer herstellende Öffnung vorgesehen sein. Ferner kann das Austrittsrohr über wenigstens eine in einer Rohrwandung des Austrittsrohrs vorgesehene Durchtrittsöffnung zu der weiteren Kammer offen sein.

Das Austrittsrohr kann zum Austritt von Abgas aus dem Schalldämpfergehäuse wenigstens ein, vorzugsweise zwei Austrittsrohr-Endrohre umfassen. Derartige Austrittsrohr-Endrohre können gleichzeitig auch die Endrohre einer gesamten Abgasanlage bilden, über welche das gegebenenfalls zur Verringerung des Schadstoffausstoßes in einer oder mehreren Katalysatoranordnungen behandelte Abgas nach außen abgegeben wird. Grundsätzlich kann über derartige Austrittsrohr-Endrohre jedoch auch eine Anbindung an einen stromabwärts folgenden Bereich einer Abgasanlage, beispielsweise einen weiteren Schalldämpfer, erfolgen.

Für eine stabile Verbindung kann das erste Eintrittsrohr mit dem Austrittsrohr verbunden sein durch
- wenigstens einen Schweißbereich , vorzugsweise Schlitzschweißbereich, oder/und
- wenigstens ein stabartiges Verbindungselement,
   oder/und
- wenigstens ein scheibenartiges Verbindungselement mit wenigstens einer, vorzugsweise einer Mehrzahl von Durchtrittsöffnungen.

Ferner kann zur Beeinflussung des Abgasströmungsverhaltens und damit auch der akustischen Charakteristik in dem ersten Eintrittsrohr eine vorzugsweise abgasdruckbetätigte Abgasklappe vorgesehen sein.

Das erste Eintrittsrohr und das Austrittsrohr können wenigstens in ihrem ineinander eingeführten Längenbereich eine runde Querschnittsgeometrie aufweisen, wobei wenigstens ein Rohr von erstem Eintrittsrohr und Austrittsrohr eine kreisrunde Querschnittsgeometrie aufweist oder/und wenigstens ein Rohr von erstem Eintrittsrohr und Austrittsrohr eine abgeflacht runde, vorzugsweise elliptische oder ovale, Querschnittsgeometrie aufweist.

Insbesondere für Abgasanlagen, die in Zusammenwirkung mit größeren Brennkraftmaschinen einzusetzen sind, können für eine effiziente und Leistungsverluste in der Brennkraftmaschine so weit als möglich vermeidende Abgasführung zwei Abgasrohrgruppen vorgesehen sein, wobei das Austrittsrohr und das zweite Eintrittsrohr einer ersten der Abgasrohrgruppen zu einer ersten Expansionskammer offen sind und das Austrittsrohr und das zweite Eintrittsrohr einer zweiten der Abgasrohrgruppen zu einer zweiten Expansionskammer offen sind. Beispielweise können die Zylinder einer Brennkraftmaschine in zwei Gruppen aufgeteilt sein, und jeder dieser beiden Gruppen von Zylindern kann eine der Abgasrohrgruppen zugeordnet sein.

Um dabei eine Trennung der Abgasströme auch im Inneren des Schalldämpfergehäuses beibehalten zu können, wird vorgeschlagen, dass zwischen der ersten Expansionskammer und der zweiten Expansionskammer keine Abgasaustauschverbindung besteht.

Zur Einstellung des akustischen Profils eines zwei Abgasrohrgruppen umfassenden Schalldämpfers können beispielsweise die erste Abgasrohrgruppe und die zweite Abgasrohrgruppe sich unterscheiden in:
- der Querschnittsform oder/und der Querschnittsgröße des Austrittsrohrs oder/und des ersten Eintrittsrohrs,
   oder/und
- der Querschnittsform oder/und der Querschnittsgröße eines zwischen dem Austrittsrohr und dem Eintrittsrohr-Endbereich des ersten Eintrittsrohrs gebildeten Zwischenraums,
   oder/und
- der Länge des im Austrittsrohr sich erstreckenden Eintrittsrohr-Endbereichs, oder/und
- der Querschnittsform oder/und der Querschnittsgröße des zweiten Eintrittsrohrs,
   oder/und
- der Anzahl an Austrittsrohr-Endrohren,
   oder/und
- der Anzahl oder/und Positionierung oder/und Größe von in einer Rohrwandung des Austrittsrohrs oder/und einer Rohrwandung des ersten Eintrittsrohrs vorgesehenen Durchtrittsöffnungen.

Die vorliegende Erfindung betrifft ferner eine Abgasanlage für eine Brennkraftmaschine, umfassend einen Schalldämpfer mit erfindungsgemäßem Aufbau und in Zuordnung zu der wenigstens einen Abgasrohrgruppe ein Abgas zu dem ersten Eintrittsrohr und dem zweiten Eintrittsrohr leitendes Abgasführungssystem. Über das Abgasführungssystem wird das von einer Brennkraftmaschine ausgestoßene Abgas, gegebenenfalls nach Durchströmung einer oder mehrerer Abgasbehandlungsanordnungen zum Verringern des Schadstoffanteils im Abgas zu dem Schalldämpfer geleitet.

Dabei kann ein weiterer Einfluss auf das akustische Verhalten auch im Betrieb einer Brennkraftmaschine dadurch ermöglicht werden, dass bei wenigstens einer, vorzugsweise jeder Abgasrohrgruppe das Abgasführungssystem in Zuordnung zu dem ersten Eintrittsrohr eine Abgasklappe umfasst. Eine derartige Abgasklappe umfasst eine im Allgemeinen durch einen elektromotorischen Stellantrieb verstellbare Klappenblende, die zur Veränderung des Abgasstroms zum jeweiligen ersten Eintrittsrohr zwischen einer den Abgasstrom maximal freigebenden Freigabestellung und einer den Abgasstrom maximal drosselnden bzw. unterbindenden Schließstellung verstellbar ist und für eine im Wesentlichen stufenlose Veränderung des akustischen Verhaltens vorzugsweise auch Zwischenstellungen zwischen der Freigabestellung und der Schließstellung einnehmen kann.

Zum Zuleiten von Abgas zu den beiden Eintrittsrohren einer jeweiligen Abgasrohrgruppe wird vorgeschlagen, dass bei wenigstens einer, vorzugsweise jeder Abgasrohrgruppe das Abgasführungssystem einen Abgas-Hauptstrang und einen an einer Aufzweigstelle von dem Abgas-Hauptstrang zu dem ersten Eintrittsrohr führenden ersten Abgas-Zweigstrang sowie einen von dem Abgas-Hauptstrang zu dem zweiten Eintrittsrohr führenden zweiten Abgas-Zweigstrang umfasst.

Wenn dabei die Aufzweigstelle eine Abgasstrom-Regulieranordnung umfasst und durch die Abgasstrom-Regulieranordnung der Abgasstrom in den ersten Abgas-Zweigstrang und der Abgasstrom in den zweiten Abgas-Zweigstrang veränderbar sind, kann durch die Beeinflussung der Abgasströme, d.h. der durch die beiden Eintrittsrohre jeweils geleiteten Anteile des gesamten Abgasstroms, ein weiterer Einfluss auf das akustische Verhalten erreicht werden.

Bei derartiger Ausgestaltung kann bei wenigstens einer, vorzugsweise jeder Abgasrohrgruppe die Abgasklappe im ersten Abgas-Zweigstrang vorgesehen sein. Somit kann einerseits durch die Abgasklappe und andererseits durch die Abgasstrom-Regulieranordnung einen Einfluss auf die Verteilung der durch die jeweiligen Eintrittsrohre geleiteten Abgas-Teilströme und somit auch auf das akustische Verhalten des Schalldämpfers genommen werden.

Bei einer anderen Ausgestaltungsart kann bei wenigstens einer, vorzugsweise jeder Abgasrohrgruppe eine Abgasklappe im ersten Eintrittsrohr vorgesehen sein.

Die vorliegende Erfindung wird nachfolgend mit Bezug auf die beiliegenden Figuren geschrieben. Es zeigt:
- Fig. 1: in prinzipartiger Darstellung eine Abgasanlage einer Brennkraftmaschine mit einem Schalldämpfer und einem Abgas zu dem Schalldämpfer leitenden Abgasführungssystem;
- Fig. 2: eine der Fig. 1 entsprechende Darstellung einer alternativen Ausgestaltungsart einer Abgasanlage bzw. eines dafür vorgesehenen Schalldämpfers;
- Fig. 3: in ihren Darstellungen a)-e) verschiedene Querschnittsformen eines in einer Austrittsrohr eingeführten ersten Eintrittsrohrs eines Schalldämpfers gemäß Fig. 1 oder Fig. 2;
- Fig.4: in ihren Darstellungen a), b) und c) verschiedene Arten der Verbindung eines Austrittsrohrs mit einem ersten Eintrittsrohr;
- Fig. 5: einen Ausschnitt des in Fig. 1 dargestellten Schalldämpfers mit alternativen Ausgestaltungsaspekten.

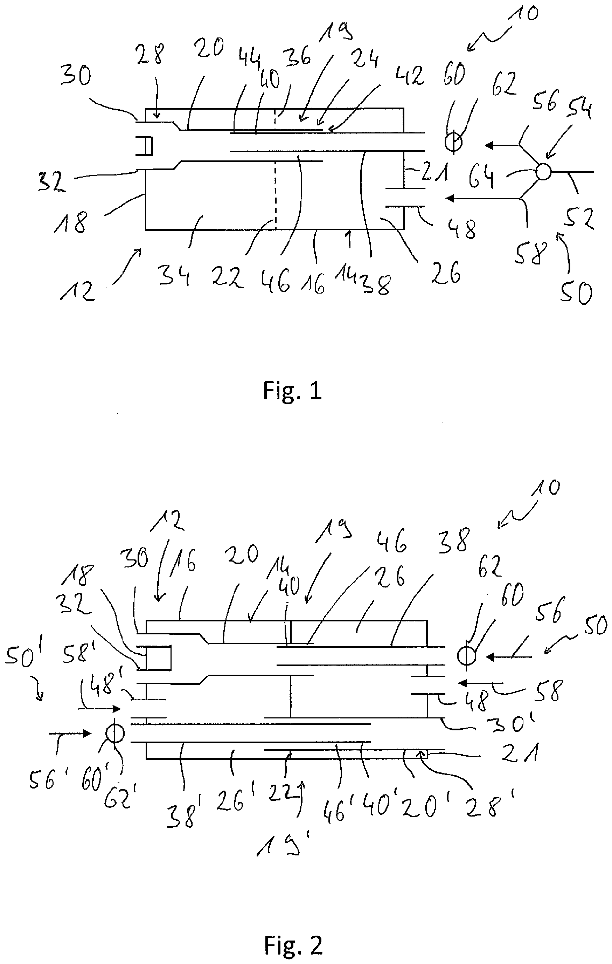

In Fig. 1 ist in prinzipartiger Darstellung eine allgemein mit 10 bezeichnete Abgasanlage für eine Brennkraftmaschine beispielsweise in einem Fahrzeug dargestellt. Die Abgasanlage 10 umfasst als wesentlichen Bestandteil einen Schalldämpfer 12, der beispielsweise als Nachschalldämpfer an einem Endbereich einer Abgasanlage im Allgemeinen im Heckbereich eines Fahrzeugs angeordnet sein kann. Der Schalldämpfer 12 umfasst ein im Allgemeinen im Wesentlichen zylindrisch, beispielsweise mit kreisrundem Querschnitt gebildetes Schalldämpfergehäuse 14 mit einer Umfangswandung 16 und an den beiden Längsendbereichen derselben jeweils einer Stirnwandung 18, 21. Zum Ein- bzw. Ausleiten von aus einer Brennkraftmaschine ausgestoßenem Abgas weist der Schalldämpfer 12 ferner eine allgemein mit 19 bezeichnete Abgasrohrgruppe auf. Die Abgasrohrgruppe 19 umfasst ein Austrittsrohr 20, das an der Stirnwandung 18 einerseits und beispielsweise einer im Inneren des Schalldämpfergehäuses 16 angeordneten Zwischenwandung 22 andererseits getragen sein kann. Ein stromaufwärtiges Ende 24 des Austrittsrohrs 20 liegt dabei in einer im Wesentlichen zwischen der Stirnwandung 21 und der Zwischenwandung 22 gebildeten Expansionskammer 26. An einem stromabwärtigen Endbereich 28 weist das Austrittsrohr 20 zwei die Stirnwandung 18 durchsetzende Austrittsrohr-Endrohre 30, 32 auf, die beispielsweise auch die Endrohre der gesamten Abgasanlage 10 sein können, über welche das aus einer Brennkraftmaschine ausgestoßene Abgas zur Umgebung hin abgegeben wird. Mit seinem zwischen der Zwischenwandung 22 und der Stirnwandung 18 sich erstreckenden Längenbereich verläuft das Austrittsrohr 20 im Wesentlichen in einer weiteren Kammer 34, in welcher auch die Aufzweigung des Austrittsrohrs 20 in die beiden Austrittsrohr-Endrohre 30, 32 vorgesehen sein kann. Grundsätzlich könnte diese Aufzweigung auch außerhalb der Kammer 34 bzw. des Schalldämpfergehäuses 14 angeordnet sein. Die die Expansionskammer 26 von der weiteren Kammer 34 trennende Zwischenwandung 22 kann, wie dargestellt, mit einer Vielzahl von Öffnungen 36 vorgesehen sein, um eine Verbindung zwischen den beiden Kammern 26, 34 herzustellen. Die wesentliche Funktion der Zwischenwandung 22 kann dabei in der Bereitstellung einer Abstützung für das Austrittsrohr 20 liegen.

Die Abgasrohrgruppe 19 umfasst ferner ein erstes Eintrittsrohr 38. Das erste Eintrittsrohr 38 ist durch die Stirnwandung 21 hindurch in das Innere des Schalldämpfergehäuses 14 geführt und durchsetzt die Expansionskammer 26. Mit einem Eintrittsrohr-Endbereich 40 ist das erste Eintrittsrohr 38 durch eine Austrittsrohröffnung 42 am stromaufwärtigen Austrittsrohrende 24 hindurch und in das Austrittsrohr 20 sich hinein erstreckend angeordnet. Der Eintrittsrohr-Endbereich 40 bildet somit den im Inneren des Austrittsrohrs 20 sich erstreckenden Längenbereich des ersten Eintrittsrohrs 38. An einem stromabwärtigen Ende 44 ist das erste Eintrittsrohr 38 in das Austrittsrohr 20 offen. Das Austrittsrohr 20 wiederum ist über einen zwischen dem Eintrittsrohr-Endbereich 40 und dem Austrittsrohr 20 gebildeten Zwischenraum 46 zur Expansionskammer 26 offen.

Ein zweites Eintrittsrohr 48 führt durch die Stirnwandung 21 hindurch in die Expansionskammer 26 und ist zur Expansionskammer 26 offen. Somit besteht grundsätzlich auch eine Strömungsverbindung zwischen dem zweiten Eintrittsrohr 48 und dem Austrittsrohr 20 über den Zwischenraum 46.

Zum Zuführen von Abgas zu dem Schalldämpfer 12 bzw. den beiden Eintrittsrohren 38, 48 ist ein in Fig. 1 nur schematisch dargestelltes Abgasführungssystem 50 vorgesehen. Dieses umfasst einen beispielsweise als Rohr ausgebildeten Abgas-Hauptstrang 52, der an einer Aufzweigstelle 54 in einen zum ersten Eintrittsrohr 38 führenden ersten Abgas-Zweigstrang 56, beispielsweise ebenfalls ausgebildet als Rohr, und einen zum zweiten Eintrittsrohr 48 führenden zweiten Abgas-Zweigstrang 58, beispielsweise ebenfalls ausgebildet ist als Rohr, aufgezweigt ist. Während der zweite Abgas-Zweigstrang 58 beispielsweise direkt zum zweiten Eintrittsrohr 48 führen kann, kann der erste Abgas-Zweigstrang 56 über eine Abgasklappe 60 zum ersten Eintrittsrohr 38 führen. Durch eine verstellbare Klappenblende 62 der Abgasklappe 60 kann der dem ersten Eintrittsrohr 38 zugeleitete Anteil des über den Abgas-Hauptstrang 52 heranströmenden Abgases verändert werden. Die Klappenblende 62 kann beispielsweise durch einen elektromotorischen Aktuator zwischen einer Offenstellung und einer Schließstellung verstellbar sein, oder kann in Richtung Schließstellung vorgespannt sein und durch den Abgasdruck aus der Schließstellung in Richtung Offenstellung verstellt werden. Eine weitere Beeinflussung der zu den beiden Eintrittsrohren 38, 48 geleiteten Abgas-Teilströme kann durch eine z. B. an der Abzweigstelle 54 vorgesehene Abgas-Regulierungsanordnung 64 vorgenommen werden. Diese kann beispielsweise vermittels einer verstellbaren Klappe die zu den jeweiligen Abgas-Zweigsträngen 56, 58 geleiteten Abgasmengen einstellen, so dass beispielsweise der gesamte Abgasstrom über den zweiten Abgas-Zweigstrom 58 oder der gesamte Abgasstrom über den ersten Abgas-Zweigstrang 56 oder über jeden dieser Zweigstränge 56, 58 ein in seiner Menge verstellbarer Anteil des Abgasstroms geleitet werden kann. Durch die auch im Betrieb einer Brennkraftmaschine ansteuerbaren und somit verstellbaren Baugruppen Abgasklappe 60 und Abgasstrom-Regulieranordnung 64 kann aufgrund der damit veränderbaren Abgasströme ein Einfluss auf das akustische Verhalten des Schalldämpfers 12 im Betrieb genommen werden.

Ein weiterer, bei der Konzeption des Schalldämpfers 12 festzulegender Einfluss auf dessen akustisches Verhalten kann durch die Wechselwirkung des ersten Eintrittsrohrs 38 mit dem Austrittsrohr 20 erreicht werden. Dessen Eintauchtiefe in das Austrittsrohr 20 und auch die Querschnittsform und Querschnittsabmessung des zwischen dem Eintrittsrohr-Endbereich 40 und dem Austrittsrohr 20 gebildeten Zwischenraums 46 haben einen substantiellen Einfluss auf das akustische Verhalten des Schalldämpfers 12. Da dabei in demjenigen Bereich, in dem das über den ersten Abgas-Zweigstrang 56 geleitete Abgas aus dem ersten Eintrittsrohr 38 in das Austrittsrohr 20 austritt eine Erweiterung des Strömungsquerschnitts vorliegt, erfolgt in diesem Bereich auch keine Drosselwirkung, welche die Leistung einer Brennkraftmaschine beeinträchtigen könnte.

Die Eintauchtiefe des ersten Eintrittsrohrs 38 in das Austrittsrohr 20 könnte beispielsweise auch derart gewählt werden, dass das erste Eintrittsrohr 38 im Erstreckungsbereich der Expansionskammer endet. Auch könnte eine Strömungsverbindung zwischen dem Austrittsrohr 20 und der Expansionskammer 26 dadurch oder zusätzlich dadurch realisiert sein, dass in einer Rohrwandung des Austrittsrohrs 20 eine Mehrzahl von Durchtrittsöffnungen vorgesehen ist, durch welche hindurch der über das zweite Eintrittsrohr 48 in die Expansionskammer 26 geleitete Anteil des Abgasstroms in das Austrittsrohr 20 einströmen kann. Um dabei zu verhindern, dass über das erste Eintrittsrohr 38 eingeleitetes Abgas durch derartige Durchtrittsöffnungen hindurch in die Expansionskammer 26 strömt, sind vorzugsweise derartige Durchtrittsöffnungen in demjenigen Längenbereich des Austrittsrohrs 20 positioniert, in welchem der Eintrittsrohr-Endbereich 40 sich erstreckt, so dass aus dem Eintrittsrohr 38 austretendes Abgas in denjenigen Bereich des Austrittsrohrs 20 eintritt, in welchem keine derartigen Durchtrittsöffnungen vorgesehen sind. Da ferner dafür gesorgt werden soll, dass das über das erste Eintrittsrohr 48 zugeführte Abgas grundsätzlich nicht zur Expansionskammer 26 austritt, weist das erste Eintrittsrohr 38 in seinem die Expansionskammer 26 durchsetzenden Längenbereich, insbesondere auch dem außerhalb des Austrittsrohrs 20 sich erstreckenden Längenbereich, keine eine direkte Strömungsverbindung zur Expansionskammer 26 herstellenden Durchtrittsöffnungen in seiner Rohrwandung auf, so dass das erste Eintrittsrohr als reines Durchgangsrohr wirksam ist.

Weiter ist darauf hinzuweisen, dass selbstverständlich zur Beeinflussung des akustischen Verhaltens des Schalldämpfers 12 auch mehr Zwischenwandungen vorgesehen sein können bzw. diese an anderer Stelle positioniert sein können oder/und das Schalldämpfergehäuse 16 wenigstens bereichsweise mit schalldämmendem Material, beispielsweise Fasermaterial, ausgekleidet sein kann.

Eine alternative Ausgestaltungsart ist in Fig. 2 gezeigt. Diese nutzt grundsätzlich die Ausgestaltungsprinzipien, welche vorangehend mit Bezug auf die Fig. 1 und die dort dargestellte Abgasrohrgruppe 19 erläutert worden sind, weist jedoch im Gegensatz zur Ausgestaltungsform der Fig. 1 zwei derartige Abgasrohrgruppen 19, 19' auf. Die Abgasrohrgruppe 19 der in Fig. 2 dargestellten Ausgestaltungsform kann in Aufbau und Funktion im Wesentlichen der Abgasrohrgruppe 19 der in Fig. 1 dargestellten Ausgestaltungsform entsprechen. Dies gilt auch für das in Fig. 2 nur teilweise dargestellte, der ersten Abgasrohrgruppe 19 zugeordnete Abgasführungssystem 50 mit seinen beiden Abgas-Zweigsträngen 56, 58 und der im ersten Abgas-Zweigstrang vorgesehenen Abgasklappe 60.

Auch die in Fig. 2 dargestellte zweite Abgasrohrgruppe 19' umfasst ein Austrittsrohr 20', welches einerseits an der Zwischenwandung 22 und andererseits an der Stirnwandung 21 getragen ist. Anders als das Austrittsrohr 20 der ersten Abgasrohrgruppe 19, weist das Austrittsrohr 20 der zweiten Abgasrohrgruppe 19' nur ein im Wesentlichen durch dessen stromabwärtigen Endbereich 28' bereitgestelltes Abgasrohr-Endrohr 30' auf, welches beispielsweise durch die Stirnwandung 21 hindurchgeführt ist. Das erste Eintrittsrohr 38' der zweiten Abgasrohrgruppe 19' erstreckt sich durch die Stirnwandung 18 hindurch und verläuft mit seinem Eintrittsrohr-Endbereich 40' im stromaufwärtigen Teil des Austrittsrohrs 20' der zweiten Abgasrohrgruppe 19'.

Der zweiten Abgasrohrgruppe 19' ist ein Abgasführungssystem 50' zugeordnet, welches grundsätzlich so aufgebaut sein kann, wie das in Zuordnung zur ersten Abgasrohrgruppe 19 vorgesehene Abgasführungssystem 50 und einen ersten Abgas-Zweigstrang 56' sowie einen zweiten Abgas-Zweigstrang 58' aufweisen kann. Beispielsweise können die den beiden Abgasrohrgruppen 19, 19' zugeordneten Abgasführungssysteme 50, 50' mit jeweils verschiedenen Gruppen von Zylindern einer Brennkraftmaschine zusammenwirken bzw. das von diesen ausgestoßene Abgas zu den jeweiligen Abgasrohrgruppen 19, 19' des Schalldämpfers 12 leiten.

Um die beiden Abgasrohrgruppen 19, 19' funktional voneinander zu entkoppeln, ist bei dem in Fig. 2 dargestellten Ausgestaltungsbeispiel die Zwischenwandung 22 vorzugsweise ohne Öffnungen ausgebildet, so dass in Zuordnung zu jeder Abgasrohrgruppe 19, 19' im Schalldämpfergehäuse 14 6 eine separate Expansionskammer 26 bzw. 26' gebildet ist und keine Abgasaustauschverbindung zwischen den beiden Expansionskammern 26, 26' besteht.

Bei dem in Fig. 2 veranschaulichten Aufbau können auch hinsichtlich des akustischen Verhaltens die beiden Abgasrohrgruppen 19, 19' insbesondere in der Wechselwirkung des jeweiligen ersten Eintrittsrohrs 26, 26' mit dem Austrittsrohr 20, 20' in unterschiedlicher Art und Weise zusammenwirken. So kann, wie in Fig. 2 veranschaulicht, die Eintauchtiefe des jeweiligen ersten Eintrittsrohrs 38, 38' in das Austrittsrohr 20, 20' unterschiedlich bemessen sein. Auch die Relativpositionierung quer zur Längserstreckungsrichtung kann unterschiedlich gewählt sein. Zusätzlich ist es möglich, die Querschnittsform oder/und die Querschnittsabmessung der ersten Eintrittsrohre 38, 38' unterschiedlich zu wählen, ebenso wie die Querschnittsform oder/und die Querschnittsabmessung der jeweiligen Austrittsrohre 20, 20'. Auch die zweiten Eintrittsrohre 48, 48' können hinsichtlich Querschnittsform oder/und Querschnittsabmessung unterschiedlich gewählt werden. Es ist hier darauf hinzuweisen, dass, sofern auf die Querschnittsabmessung Bezug genommen ist, dies beispielsweise die durchströmbare Querschnittsfläche oder bei kreisrunder Ausgestaltung den Innendurchmesser oder den Innenradius der jeweils betroffenen Rohre bezeichnen kann.

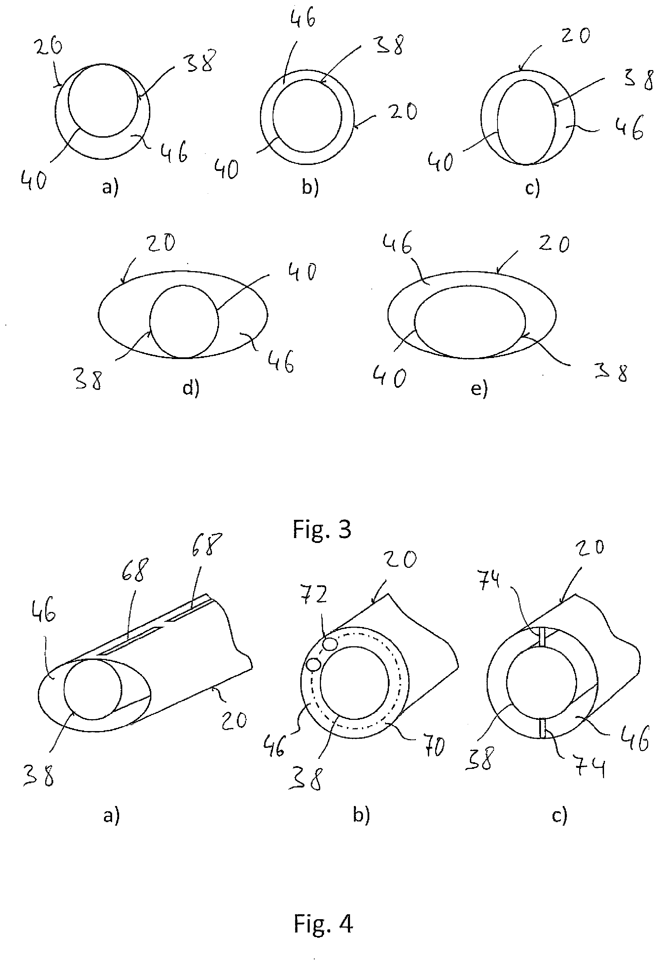

Die Fig. 3 veranschaulicht in ihren Darstellungen a)-e) verschiedene Möglichkeiten, wie die Wechselwirkung des ersten Eintrittsrohrs 38 mit dem Austrittsrohr 20 unterschiedlich gestaltet werden kann. Es sei darauf hingewiesen, dass dies in der Ausgestaltungsform der Fig. 2 selbstverständlich auch die Wechselwirkung des ersten Eintrittsrohrs 38' mit dem Austrittsrohr 20' der zweiten Abgasrohrgruppe 19' betrifft.

Die Fig. 3a) zeigt, dass die beiden ineinander eingeschobenen Rohre 20, 38 mit jeweils kreisrunder Querschnittsform bereitgestellt sein können und das erste Eintrittsrohr 38 mit seinem Eintrittsrohr-Endbereich 40 bezüglich einer Längsmittenachse des Austrittsrohrs 20 exzentrisch angeordnet sein kann, beispielsweise mit seiner Umfangswandung die Umfangswandung des Austrittsrohrs 20 berühren kann und daran beispielsweise durch Materialschluss, wie z. B. Verschweißen oder Verlöten, festgelegt sein kann. Der zwischen diesen beiden Rohren 38, 20 gebildete Zwischenraum 46 weist somit eine im Wesentlichen sichelförmige Gestalt auf.

Bei der in Fig. 3b) dargestellten Ausgestaltungsform sind die beiden mit runder, insbesondere kreisrunder Querschnittsgeometrie ausgebildeten Rohre 20, 38 zueinander konzentrisch angeordnet, so dass der Zwischenraum 46 eine im Wesentlichen kreisringartige Gestalt aufweist. Auch eine derartige konzentrische Anordnung beispielsweise mit elliptischer Querschnittsgeometrie ausgebildeter Rohre ist möglich.

Die Fig. 3c) veranschaulicht ein Ausgestaltungsbeispiel, bei welchem das Austrittsrohr 20 zumindest in seinem das erste Eintrittsrohr 38 bzw. dessen Eintrittsrohr-Endbereich 40 aufnehmenden Längenabschnitt oder einem Teil davon mit kreisrunder Querschnittsform ausgebildet ist, während der Eintrittsrohr-Endbereich 40 mit einer von einer kreisrunden Querschnittsform abweichenden Querschnittsform, beispielsweise einer elliptischen oder ovalen Querschnittsform, ausgebildet sein kann. Hier könnte selbstverständlich auch die Ausgestaltung derart sein, dass das Austrittsrohr 20 eine derartige von einer kreisrunden Querschnittsform abweichende Geometrie aufweist, während der Eintrittsrohr-Endbereich 40 mit kreisrunder oder beispielsweise ebenfalls nicht kreisrunder Querschnittsform bereitgestellt ist. Die beiden Rohre 20, 38 berühren sich in einem Umfangsbereich, so dass sie in diesem Bereich der gegenseitigen Berührung, wie nachfolgend erläutert, miteinander verbunden sein können.

Bei dem in Fig. 3d) dargestellten Ausgestaltungsbeispiel weist das Austrittsrohr 20 zumindest in seinem den Endbereich 40 des ersten Eintrittsrohrs 38 aufnehmenden Längenbereich eine runde, elliptische Querschnittsgeometrie auf, während das erste Eintrittsrohr 38 zumindest in seinem im Austrittsrohr 20 sich erstreckenden Endbereich 40 eine kreisrunde Querschnittsgeometrie aufweist. Auch bei diesem Ausgestaltungsbeispiel berühren die beiden Rohre 20, 38 sich in einem Umfangsbereich, könnten aber auch so angeordnet sein, dass das erste Eintrittsrohr 38 auch in Höhenrichtung im Austrittsrohr 20 zentriert angeordnet ist.

Die Fig. 3e) zeigt eine Ausgestaltung der beiden Rohre 38, 20 jeweils mit abgeflacht runder, beispielsweise elliptischer Querschnittsgeometrie, wobei auch hier die beiden Rohre 20, 38 sich in einem Umfangsbereich, insbesondere in Bereichen jeweils mit dem größten Krümmungsradius gegenseitig berühren.

In Fig. 4 sind verschiedene Möglichkeiten der gegenseitigen Verbindung der Rohre 20, 38 dargestellt. So zeigt die Fig. 4a) die Verbindung der mit der in Fig. 3d) dargestellten Querschnittsgeometrie ausgebildeten Rohre 20, 38. In ihren sich gegenseitig berührenden Bereichen sind die Rohre 20, 38 in einer Mehrzahl von beispielsweise in der Rohrlängsrichtung aufeinanderfolgenden Schlitzschweißbereichen 68 miteinander verbunden. Hierzu können in der Rohrwandung des Austrittsrohrs 20 mehrere z. B. in der Rohrlängsrichtung aufeinanderfolgende Schlitze vorgesehen sein. Durch diese Schlitze hindurch bzw. entlang der Berührungslinie der beiden Rohre 20, 38 können diese miteinander verschweißt sein.

Bei der in Fig. 4b) dargestellten Art der Verbindung können die beiden Rohre 20, 38 durch eine oder mehrere im Zwischenraum 46 angeordnete, ringartige Scheiben 70 miteinander verbunden sein. Insbesondere kann eine derartige Scheibe 70 am stromaufwärts liegen Ende des Austrittsrohrs 20 dort, wo das erste Eintrittsrohr 38 in dieses eintritt, vorgesehen und sowohl am Austrittsrohr 20, als auch am ersten Eintrittsrohr 38 durch Verschweißung festgelegt sein. In der Scheibe 70 sind, wie durch eine Strich-Punkt-Linie angedeutet, mehrere in Umfangsrichtung aufeinanderfolgende Durchtrittsöffnungen vorgesehen, welche eine Verbindung zwischen dem Zwischenraum 46 und der Expansionskammer 26 bereitstellen.

Die Fig. 4c) zeigt die Verbindung der beiden Rohre 20, 38 unter Einsatz stabartiger oder bolzenartiger Verbindungselemente 74. Diese können am Außenumfang des ersten Eintrittsrohrs 38 und an Innenumfang des Austrittsrohrs 20 beispielsweise durch Verschweißung festgelegt sein. Es ist darauf hinzuweisen, dass mehr als zwei stabartige oder bolzenartige Verbindungselemente 74 über den Umfang und in Rohrlängsrichtung verteilt vorgesehen sein können. Auch können diese insbesondere in Rohrlängsrichtung und somit auch in Abgasströmungsrichtung plattenartig langgestreckt sein und beispielsweise tropfenartig oder tragflächenartig profiliert sein.

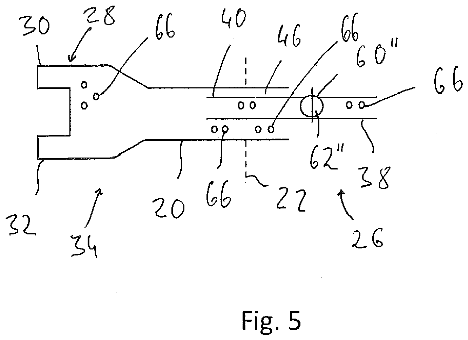

Die Fig. 5 zeigt konstruktive Varianten des Austrittsrohrs 20 bzw. des in dieses eingeführten ersten Eintrittsrohrs 38. Es ist darauf hinzuweisen, dass die nachfolgend erläuterten konstruktiven Varianten einzeln oder in beliebiger Kombination auch bei dem in Fig. 1 dargestellten Schalldämpfer und auch bei einer oder beiden der in Fig. 2 dargestellten Abgasrohrgruppen 19, 19' realisiert sein können.

In Fig. 5 ist veranschaulicht, dass im Austrittsrohr 20 oder/und im ersten Eintrittsrohr 38 an verschiedenen Positionen Durchtrittsöffnungen 66 in der jeweiligen Rohrwandung vorgesehen sein können. So können im ersten Eintrittsrohr 38 in dessen außerhalb des Austrittsrohrs 20 jedoch in der Expansionskammer 26 sich erstreckenden Längenbereich derartige Durchtrittsöffnungen 66 vorgesehen sein, über welche das erste Eintrittsrohr 38 zur Expansionskammer 26 offen ist. Auch im Austrittsrohr 20 können in dessen Erstreckungsbereich in der Expansionskammer 26 Durchtrittsöffnungen 66 vorgesehen sein, über welche der Zwischenraum 46 zur Expansionskammer 26 offen ist. Auch in seinem in der weiteren Kammer 34 sich erstreckenden Längenbereich kann das Austrittsrohr 20 mit Durchtrittsöffnungen 66 versehen sein. Diese können beispielsweise in dem Längenbereich des Austrittsrohrs 20 vorgesehen sein, in welchem der Endbereich 40 des ersten Eintrittsrohrs 38 sich erstreckt, so dass über derartige Durchtrittsöffnungen 66 der Zwischenraum 46 zur weiteren Kammer 34 offen ist. Auch in anderen im Bereich der weiteren Kammer 34 sich erstreckenden Längenbereichen des Austrittsrohrs 20 können derartige Durchtrittsöffnungen vorgesehen sein. So zeigt die Fig. 5 Durchtrittsöffnungen 66 im stromabwärtigen Endbereich 28 des Austrittsrohrs 20 dort, wo dies eine näherungsweise Y-förmige Gestalt aufweist und in die beiden Endrohre 30, 32 übergeht.

Es ist zu betonen, dass derartige in verschiedenen Bereichen der Rohre 20, 38 vorgesehene Durchtrittsöffnungen 66 hinsichtlich ihrer Gruppierungsdichte oder/und ihrer Querschnittsgeometrie oder/und ihrer Größe sich unterscheiden können. Auch können bei dem in Fig. 2 dargestellten Ausgestaltungsbeispiel bei den beiden Abgasrohrgruppen 19, 19' derartige Durchtrittsöffnungen an jeweils gleichen Positionen und mit gleicher Gestalt bzw. Größe vorgesehen sein. Alternativ können die beiden Abgasrohrgruppen 19, 19' sich in der Anzahl oder/und Größe oder/und Formgebung oder/und Positionierung derartiger Durchtrittsöffnungen 66 unterscheiden.

Ein weiterer in Fig. 5 veranschaulichter Ausgestaltungsaspekt ist das Vorsehen einer Abgasklappe 60 bzw. einer verstellbaren Klappenblende 62 derselben im ersten Eintrittsrohr 38 vorzugsweise in seinem im Schalldämpfergehäuse 14 sich erstreckenden Längenbereich. Da dieser Bereich für eine motorische Betätigung der Klappenblende 62 nur schwer zugänglich ist, eignet sich hier ein derartiger Aufbau der Abgasklappe 60, bei welchem die Klappenblende 62 beispielsweise durch eine Feder in eine Schließstellung vorgespannt ist und durch den Abgasdruck im ersten Eintrittsrohr 38 in Richtung zu einer Offenstellung verstellt werden kann.

Auch hinsichtlich des Vorsehens einer derartigen Abgasklappe 60 im Inneren des Schalldämpfers 12 ist anzumerken, dass eine derartige Ausgestaltung bei einer oder beiden Abgasrohrgruppen 19, 19' der in Figur 2 dargestellten Ausgestaltungsform realisiert sein kann. Auch könnte bei einer der beiden Abgasrohrgruppen 19, 19' eine derartige passive Abgasklappe 60 im ersten Eintrittsrohr 38 im Inneren des Schalldämpfers 12 vorgesehen sein, während bei der anderen der beiden Abgasrohrgruppen 19, 19' eine in Fig. 2 dargestellte Abgasklappe 60 außerhalb des Schalldämpfers im Abgasführungssystem vorgesehen sein könnte und beispielsweise elektromotorisch betätigt sein könnte.

Durch die erfindungsgemäße Ausgestaltung eines Schalldämpfers insbesondere in der Zusammenwirkung eines Eintrittsrohrs mit einem dieses aufnehmenden Austrittsrohr wird es möglich, das akustische Verhalten bzw. das akustische Profil eines Schalldämpfers in einem weiten Bereich zu variieren und somit ein für eine Brennkraftmaschine gewünschtes akustisches Profil bereitstellen zu können. Dies kann dadurch unterstützt werden, dass bereits in der Abgaszuführung ein Einfluss genommen werden kann auf die einem ersten Eintrittsrohr und einem zweiten Eintrittsrohr jeweils zugeleiteten Teilströme des von einer Brennkraftmaschine abgegebenen Abgases, so dass einerseits durch die konstruktive Ausgestaltung des Schalldämpfers ein akustisches Grundprofil vorgegeben werden kann und andererseits dieses akustische Grundprofil, beispielsweise durch Einwirkung auf eine Abgasklappe oder/und eine Abgasstrom-Regulieranordnung, betriebsabhängig variiert werden kann.

## Patentansprüche

1. Schalldämpfer für eine Abgasanlage einer Brennkraftmaschine, umfassend ein Schalldämpfergehäuse (14) und wenigstens eine Abgasrohrgruppe (19, 19'), wobei die wenigstens eine Abgasrohrgruppe (19, 19') umfasst:
- ein zu einer in dem Schalldämpfergehäuse (16) gebildeten Expansionskammer (26, 26') offenes Austrittsrohr (20, 20'), wobei über die wenigstens eine Abgasrohrgruppe (19, 19') eingeleitetes Abgas das Schalldämpfergehäuse (14) über das Austrittsrohr (20, 20') verlässt,
- ein erstes Eintrittsrohr (38, 38'), wobei das erste Eintrittsrohr (38, 38') einen in das Austrittsrohr (20, 20') eingeführten und in dem Austrittsrohr (20, 20') sich erstreckenden Eintrittsrohr-Endbereich (40, 40') aufweist, **gekennzeichnet durch** ein zweites Eintrittsrohr (48, 48'), wobei das zweite Eintrittsrohr (48, 48') zu der Expansionskammer (26, 26') offen ist.

2. Schalldämpfer nach Anspruch 1, **dadurch gekennzeichnet, dass** das Austrittsrohr (20, 20') an einem stromaufwärtigen Ende (24) des Austrittsrohrs (20, 20') eine das erste Eintrittsrohr (38, 38') aufnehmende Austrittsrohröffnung (42) aufweist, und dass das Austrittsrohr (20, 20') über einen zwischen dem Austrittsrohr (20, 20') und dem ersten Eintrittsrohr (38, 38') gebildeten Zwischenraum (46, 46') im Bereich der Austrittsrohröffnung (42) zu der Expansionskammer (26, 26') offen ist.

3. Schalldämpfer nach Anspruch 1 oder 2, **dadurch gekennzeichnet, dass**
- das Austrittsrohr (20, 20') über wenigstens eine in einer Rohrwandung des Austrittsrohrs (20, 20') vorgesehene Durchtrittsöffnung (66) zu der Expansionskammer (26, 26') offen ist,
oder/und
- das erste Eintrittsrohr (38, 38') über wenigstens eine in einer Rohrwandung des ersten Eintrittsrohrs (38, 38') vorgesehene Durchtrittsöffnung (66) zu der Expansionskammer (26, 26') offen ist,
oder/und
- das erste Eintrittsrohr (38, 38') über wenigstens eine in einer Rohrwandung des ersten Eintrittsrohrs (38, 38') vorgesehene Durchtrittsöffnung (66) zu einem zwischen dem Austrittsrohr (20, 20') und dem ersten Eintrittsrohr (38, 38') gebildeten Zwischenraum (46, 46') offen ist.

4. Schalldämpfer nach Anspruch 3, **dadurch gekennzeichnet, dass** in der Rohrwandung eine Mehrzahl von Durchtrittsöffnungen vorgesehen ist, oder/und dass wenigstens eine, vorzugsweise jede Durchtrittsöffnung im Erstreckungsbereich des Eintrittsrohr-Endbereichs (40, 40') vorgesehen ist.

5. Schalldämpfer nach einem der vorangehenden Ansprüche, **dadurch gekennzeichnet, dass** in dem Schalldämpfergehäuse (14) wenigstens eine von der Expansionskammer (26) durch eine Wandung (22) getrennte weitere Kammer (34) vorgesehen ist.

6. Schalldämpfer nach Anspruch 5, **dadurch gekennzeichnet, dass** in der Wandung (22) wenigstens eine eine Verbindung zwischen der Expansionskammer (26) und der durch die Wandung (22) von dieser getrennten weiteren Kammer (34) herstellende Öffnung (36) vorgesehen ist, oder/und dass das Austrittsrohr (20, 20') über wenigstens eine in einer Rohrwandung des Austrittsrohrs (20, 20') vorgesehene Durchtrittsöffnung (66) zu der weiteren Kammer (34, 34') offen ist.

7. Schalldämpfer nach einem der vorangehenden Ansprüche, **dadurch gekennzeichnet, dass** das Austrittsrohr (20, 20') zum Austritt von Abgas aus dem Schalldämpfergehäuse wenigstens ein, vorzugsweise zwei Austrittsrohr-Endrohre (30, 32, 30') umfasst.

8. Schalldämpfer nach einem der vorangehenden Ansprüche, **dadurch gekennzeichnet, dass** das erste Eintrittsrohr (38, 38') mit dem Austrittsrohr (20, 20') verbunden ist durch
- wenigstens einen Schweißbereich (68), vorzugsweise Schlitzschweißbereich,
oder/und
- wenigstens ein scheibenartiges Verbindungselement (70) mit wenigstens einer, vorzugsweise einer Mehrzahl von Durchtrittsöffnungen (72),
oder/und
- wenigstens ein stabartiges Verbindungselement (74).

9. Schalldämpfer nach einem der vorangehenden Ansprüche, **dadurch**
**gekennzeichnet,**
**dass** in dem ersten Eintrittsrohr (38) eine vorzugsweise abgasdruckbetätigte Abgasklappe (60") vorgesehen ist,
oder/und
**dass** das erste Eintrittsrohr (38, 38') und das Austrittsrohr (20, 20') wenigstens in ihrem ineinander eingeführten Längenbereich eine runde Querschnittsgeometrie aufweisen, wobei wenigstens ein Rohr von erstem Eintrittsrohr (38, 38') und Austrittsrohr (20, 20') eine kreisrunde Querschnittsgeometrie aufweist oder/und wenigstens ein Rohr von erstem Eintrittsrohr (38, 38') und Austrittsrohr (20, 20') eine abgeflacht runde, vorzugsweise elliptische oder ovale, Querschnittsgeometrie aufweist.

10. Schalldämpfer nach einem der vorangehenden Ansprüche, **dadurch**
**gekennzeichnet, dass** zwei Abgasrohrgruppen (19, 19') vorgesehen sind, wobei das Austrittsrohr (20) und das zweite Eintrittsrohr (48) einer ersten der Abgasrohrgruppen (19, 19') zu einer ersten Expansionskammer (26) offen sind und das Austrittsrohr (20') und das zweite Eintrittsrohr (48') einer zweiten der Abgasrohrgruppen (19, 19') zu einer zweiten Expansionskammer (26') offen sind,
vorzugsweise wobei zwischen der ersten Expansionskammer (26) und der zweiten Expansionskammer (26') keine Abgasaustauschverbindung besteht.

11. Schalldämpfer nach Anspruch 10, **dadurch gekennzeichnet, dass** die erste Abgasrohrgruppe (19) und die zweite Abgasrohrgruppe (19') sich unterscheiden in:
- der Querschnittsform oder/und der Querschnittsgröße des Austrittsrohrs (20, 20') oder/und des ersten Eintrittsrohrs (38, 38'),
oder/und
- der Querschnittsform oder/und der Querschnittsgröße eines zwischen dem Austrittsrohr (20, 20') und dem Eintrittsrohr-Endbereich (40, 40') des ersten Eintrittsrohrs (38, 38') gebildeten Zwischenraums (46, 46'),
oder/und
- der Länge des im Austrittsrohr (20, 20') sich erstreckenden Eintrittsrohr-Endbereichs (40, 40'),
oder/und
- der Querschnittsform oder/und der Querschnittsgröße des zweiten Eintrittsrohrs (48, 48'),
oder/und
- der Anzahl an Austrittsrohr-Endrohren (30, 32, 30'),
oder/und
- der Anzahl oder/und Positionierung oder/und Größe von in einer Rohrwandung des Austrittsrohrs (20, 20') oder/und einer Rohrwandung des ersten Eintrittsrohrs (38, 38') vorgesehenen Durchtrittsöffnungen (66).

12. Abgasanlage für eine Brennkraftmaschine, umfassend einen Schalldämpfer (12) nach einem der vorangehenden Ansprüche und in Zuordnung zu der wenigstens einen Abgasrohrgruppe (19, 19') ein Abgas zu dem ersten Eintrittsrohr (38, 38') und dem zweiten Eintrittsrohr (48, 48') leitendes Abgasführungssystem (50, 50'),
vorzugsweise wobei bei wenigstens einer, vorzugsweise jeder Abgasrohrgruppe (19, 19') eine Abgasklappe (60") im ersten Eintrittsrohr (38, 38') vorgesehen ist.

13. Abgasanlage nach Anspruch 12, **dadurch gekennzeichnet, dass** bei wenigstens einer, vorzugsweise jeder Abgasrohrgruppe (19, 19') das Abgasführungssystem (50, 50') in Zuordnung zu dem ersten Eintrittsrohr (38, 38') eine Abgasklappe (60, 60') umfasst.

14. Abgasanlage nach Anspruch 12 oder 13, **dadurch gekennzeichnet, dass** bei wenigstens einer, vorzugsweise jeder Abgasrohrgruppe (19, 19') das Abgasführungssystem (50, 50') einen Abgas-Hauptstrang (52) und einen an einer Aufzweigstelle (54) von dem Abgas-Hauptstrang (52) zu dem ersten Eintrittsrohr (38, 38') führenden ersten Abgas-Zweigstrang (56, 56') sowie einen von dem Abgas-Hauptstrang (52) zu dem zweiten Eintrittsrohr (48, 48') führenden zweiten Abgas-Zweigstrang (58, 58') umfasst,
vorzugsweise wobei die Aufzweigstelle (54) eine Abgasstrom-Regulieranordnung (64) umfasst, wobei durch die Abgasstrom-Regulieranordnung (64) der Abgasstrom in den ersten Abgas-Zweigstrang (56, 56') und der Abgasstrom in den zweiten Abgas-Zweigstrang (58, 58') veränderbar sind.

15. Abgasanlage nach Anspruch 13 und Anspruch 14, **dadurch gekennzeichnet, dass** bei wenigstens einer, vorzugsweise jeder Abgasrohrgruppe (19, 19') die Abgasklappe (60, 60') im ersten Abgas-Zweigstrang (56, 56') vorgesehen ist.

## Claims

1. Muffler for an exhaust system of an internal combustion engine, comprising a muffler housing (14) and at least one exhaust gas pipe group (19, 19'), wherein the at least one exhaust gas pipe group (19, 19') comprises:
- an outlet pipe (20, 20') open towards an expansion chamber (26, 26') formed in the muffler housing (16), wherein exhaust gas introduced via the at least one exhaust gas pipe group (19, 19') leaves the muffler housing (14) via the outlet pipe (20, 20'),
- a first inlet pipe (38, 38'), wherein the first inlet pipe (38, 38') has an inlet pipe end area (40, 40'), which is inserted into the outlet pipe (20, 20') and extends in the outlet pipe (20, 20'),
**characterized by**
a second inlet pipe (48, 48'), wherein the second inlet pipe (48, 48') is open towards the expansion chamber (26, 26').

2. Muffler in accordance with claim 1, **characterized in that** the outlet pipe (20, 20') has an outlet pipe opening (42) receiving the first inlet pipe (38, 38') at an upstream end (24) of the outlet pipe (20, 20'), and that the outlet pipe (20, 20') is open towards the expansion chamber (26, 26') in the area of the outlet pipe opening (42) via an intermediate space (46, 46') formed between the outlet pipe (20, 20') and the first inlet pipe (38, 38').

3. Muffler in accordance with claim 1 or 2, **characterized in that**
- the outlet pipe (20, 20') is open towards the expansion chamber (26, 26') via at least one passage opening (66) provided in a pipe wall of the outlet pipe (20, 20'),
or/and
- the first inlet pipe (38, 38') is open towards the expansion chamber (26, 26') via at least one passage opening (66) provided in a pipe wall of the first inlet pipe (38, 38'),
or/and
- the first inlet pipe (38, 38') is open towards an intermediate space (46, 46') formed between the outlet pipe (20, 20') and the first inlet pipe (38, 38') via at least one passage opening (66) provided in a pipe wall of the first inlet pipe (38, 38').

4. Muffler in accordance with claim 3, **characterized in that** a plurality of passage openings are provided in the pipe wall, or/and that at least one and preferably each passage opening is provided in the area in which the inlet pipe end area (40, 40') extends.

5. Muffler in accordance with one of the preceding claims, **characterized in that** at least one additional chamber (34) separated from the expansion chamber (26) by a wall (22) is provided in the muffler housing (14).

6. Muffler in accordance with claim 5, **characterized in that** at least one opening (36) establishing a connection between the expansion chamber (26) and the additional chamber (34) separated from this by the wall (22) is provided in the wall (22), or/and that the outlet pipe (20, 20') is open towards the additional chamber (34, 34') via at least one passage opening (66) provided in a pipe wall of the outlet pipe (20, 20').

7. Muffler in accordance with one of the preceding claims, **characterized in that** the outlet pipe (20, 20') comprises at least one and preferably two outlet pipe end pipes (30, 32, 30') for the discharge of exhaust gas from the muffler housing.

8. Muffler in accordance with one of the preceding claims, **characterized in that** the first inlet pipe (38, 38') is connected to the outlet pipe (20, 20') by
- at least one weld area (68), preferably slot weld area,
or/and
- at least one disk-like connection element (70) with at least one passage opening (72) and preferably with a plurality of passage openings (72),
or/and
- at least one connection element (74) in the form of a rod.

9. Muffler in accordance with one of the preceding claims, **characterized in that** a preferably exhaust gas pressure-actuated exhaust flap (60") is provided in the first inlet pipe (38),
or/and
that the first inlet pipe (38, 38') and the outlet pipe (20, 20') have a round cross-sectional geometry at least in their length area in which they are inserted one into the other, wherein at least one pipe of the first inlet pipe (38, 38') and the outlet pipe (20, 20') has a circular cross-sectional geometry or/and at least one pipe of the first inlet pipe (38, 38') and the outlet pipe (20, 20') has a flattened round, preferably elliptical or oval cross-sectional geometry.

10. Muffler in accordance with one of the preceding claims, **characterized in that** two exhaust gas pipe groups (19, 19') are provided, wherein the outlet pipe (20) and the second inlet pipe (48) of a first of the exhaust gas pipe groups (19, 19') are open towards a first expansion chamber (26) and the outlet pipe (20') and the second inlet pipe (48') of a second of the exhaust gas pipe groups (19, 19') are open towards a second expansion chamber (26'),
preferably wherein there is no exhaust gas exchange connection between the first expansion chamber (26) and the second expansion chamber (26').

11. Muffler in accordance with claim 10, **characterized in that** the first exhaust gas pipe group (19) and the second exhaust gas pipe group (19') differ from one another in
- the shape of the cross section or/and in the size of the cross section of the outlet pipe (20, 20') or/and of the first inlet pipe (38, 38'),
or/and
- in the shape of the cross section or/and in the size of the cross section of an intermediate space (46, 46') formed between the outlet pipe (20, 20') and the inlet pipe end area (40, 40'),
or/and
- the length of the inlet pipe end area (40, 40') extending in the outlet pipe (20, 20'),
or/and
- the shape of the cross section or/and the size of the cross section of the second inlet pipe (48, 48'),
or/and
- the number of outlet pipe end pipes (30, 32, 30'),
or/and
- the number or/and positioning or/and size of passage openings (66) provided in a pipe wall of the outlet pipe (20, 20') or/and in a pipe wall of the first inlet pipe (38, 38').

12. Exhaust system for an internal combustion engine, comprising a muffler (12) in accordance with one of the preceding claims and, in association with the at least one exhaust gas pipe group (19, 19'), an exhaust gas duct system (50, 50') sending exhaust gas to the first inlet pipe (38, 38') and to the second inlet pipe (48, 48'), preferably wherein an exhaust flap (60") is provided in the first inlet pipe (38, 38') in at least one and preferably in each exhaust gas pipe group (19, 19').

13. Exhaust system in accordance with claim 12, **characterized in that** in at least one and preferably each exhaust gas pipe group (19, 19') the exhaust gas duct system (50, 50') comprises an exhaust flap (60, 60') in association to the first inlet pipe (38, 38').

14. Exhaust system in accordance with claim 12 or 13, **characterized in that** in at least one and preferably in each exhaust gas pipe group (19, 19') the exhaust gas duct system (50, 50') comprises an exhaust gas main line (52) and a first exhaust gas branch line (56, 56') leading at a branching point (54) from the exhaust gas main line (52) to the first inlet pipe (38, 38') as well as a second exhaust gas branch line (58, 58') leading from the exhaust gas main line (52) to the second inlet pipe (48, 48'), preferably wherein the branching point (54) comprises an exhaust gas flow regulating device (64), wherein the exhaust gas flow into the first exhaust gas branch line (56, 56') and the exhaust gas flow into the second exhaust gas branch line (58, 58') can be changed by the exhaust gas flow regulating device (64).

15. Exhaust system in accordance with claim 13 and claim 14, **characterized in that** the exhaust flap (60, 60') is provided in the first exhaust gas branch line (56, 56') in at least one and preferably in each exhaust gas pipe group (19, 19').

## Revendications

1. Silencieux pour un système d'échappement d'un moteur à combustion interne, comprenant un boîtier de silencieux (14) et au moins un groupe de tuyaux de gaz d'échappement (19, 19'), dans lequel ledit au moins un groupe de tuyaux de gaz d'échappement (19, 19') comprend :
- un tuyau de sortie (20, 20') ouvert vers une chambre d'expansion (26, 26') formée dans le boîtier de silencieux (16), dans lequel les gaz d'échappement introduits via ledit au moins un groupe de tuyaux de gaz d'échappement (19, 19') quittent le boîtier de silencieux (14) par le tuyau de sortie (20, 20'),
- un premier tuyau d'entrée (38, 38'), dans lequel le premier tuyau d'entrée (38, 38') présente une zone d'extrémité de tuyau d'entrée (40, 40'), qui est insérée dans le tuyau de sortie (20, 20') et s'étend dans le tuyau de sortie (20, 20'),
**caractérisé par**
un deuxième tuyau d'entrée (48, 48'), le deuxième tuyau d'entrée (48, 48') étant ouvert vers la chambre d'expansion (26, 26').

2. Silencieux selon la revendication 1, **caractérisé en ce que** le tuyau de sortie (20, 20') présente une ouverture de tuyau de sortie (42) recevant le premier tuyau d'entrée (38, 38') à une extrémité amont (24) du tuyau de sortie (20, 20'), et **en ce que** le tuyau de sortie (20, 20') est ouvert vers la chambre d'expansion (26, 26') dans la zone d'ouverture de tuyau de sortie (42) par l'intermédiaire d'un espace intermédiaire (46, 46') formé entre le tuyau de sortie (20, 20') et le premier tuyau d'entrée (38, 38').

3. Silencieux selon la revendication 1 ou 2, **caractérisé en ce que**
- le tuyau de sortie (20, 20') est ouvert vers la chambre d'expansion (26, 26') par au moins une ouverture de passage (66) prévue dans une paroi du tuyau de sortie (20, 20'),
ou/et
- le premier tuyau d'entrée (38, 38') est ouvert vers la chambre d'expansion (26, 26') par au moins une ouverture de passage (66) prévue dans une paroi du tuyau du premier tuyau d'entrée (38, 38'),
ou/et
- le premier tuyau d'entrée (38, 38') est ouvert vers un espace intermédiaire (46, 46') formé entre le tuyau de sortie (20, 20') et le premier tuyau d'entrée (38, 38') via au moins une ouverture de passage (66) prévue dans une paroi du premier tuyau d'entrée (38, 38').

4. Silencieux selon la revendication 3, **caractérisé en ce qu'**une pluralité d'ouvertures de passage sont prévues dans la paroi de tuyau, et/ou **en ce qu'**au moins une et de préférence chaque ouverture de passage est prévue dans la zone d'extension de la zone d'extrémité de tuyau d'entrée (40, 40').

5. Silencieux selon l'une des revendications précédentes, **caractérisé en ce qu'**au moins une chambre supplémentaire (34) séparée de la chambre d'expansion (26) par une paroi (22) est prévue dans le boîtier de silencieux (14).

6. Silencieux selon la revendication 5, **caractérisé en ce que** dans la paroi (22) est prévue au moins une ouverture (36) établissant une liaison entre la chambre d'expansion (26) et la chambre supplémentaire (34) séparée de celle-ci par la paroi (22), et/ou **en ce que** le tuyau de sortie (20, 20') est ouvert vers la chambre supplémentaire (34, 34') par au moins une ouverture de passage (66) prévue dans une paroi de tuyau de sortie (20, 20').

7. Silencieux selon l'une des revendications précédentes, **caractérisé en ce que** le tuyau de sortie (20, 20') comprend au moins un et de préférence deux tuyaux d'extrémité de tuyau de sortie (30, 32, 30') pour l'évacuation des gaz d'échappement du boîtier du silencieux.

8. Silencieux selon l'une des revendications précédentes, **caractérisé en ce que** le premier tuyau d'entrée (38, 38') est relié au tuyau de sortie (20, 20') par
- au moins une zone de soudure (68), de préférence une zone de soudure à fente, ou/et
- au moins un élément de liaison en forme de disque (70) avec au moins une ouverture de passage (72) et de préférence avec plusieurs ouvertures de passage (72),
ou/et
- au moins un élément de liaison (74) en forme de tige.

9. Silencieux selon l'une des revendications précédentes, **caractérisé en ce qu'**un clapet d'échappement (60"), de préférence actionné par la pression des gaz d'échappement, est prévu dans le premier tuyau d'entrée (38),
ou/et
que le premier tuyau d'entrée (38, 38') et le tuyau de sortie (20, 20') présentent une géométrie de section transversale ronde au moins dans leur zone longitudinale dans laquelle ils sont insérés l'un dans l'autre, dans lequel au moins un tuyau parmi le premier tuyau d'entrée (38, 38') et le tuyau de sortie (20, 20') présente une géométrie de section transversale circulaire et/ou au moins un tuyau parmi le premier tuyau d'entrée (38, 38') et le tuyau de sortie (20, 20') présente une géométrie de section transversale ronde aplatie, de préférence elliptique ou ovale.

10. Silencieux selon l'une des revendications précédentes, **caractérisé en ce que** deux groupes de tuyaux de gaz d'échappement (19, 19') sont prévus, dans lequel le tuyau de sortie (20) et le deuxième tuyau d'entrée (48) d'un premier des groupes de tuyaux de gaz d'échappement (19, 19') sont ouverts vers une première chambre d'expansion (26) et le tuyau de sortie (20') et le deuxième tuyau d'entrée (48') d'un deuxième des groupes de tuyaux de gaz d'échappement (19, 19') sont ouverts vers une deuxième chambre d'expansion (26'),
de préférence dans lequel il n'y a pas de connexion d'échange de gaz d'échappement entre la première chambre d'expansion (26) et la deuxième chambre d'expansion (26').

11. Silencieux selon la revendication 10, **caractérisé en ce que** le premier groupe de tuyaux de gaz d'échappement (19) et le deuxième groupe de tuyaux de gaz d'échappement (19') se distinguent l'un de l'autre par :
- la forme de la section transversale ou/et la taille de la section transversale du tuyau de sortie (20, 20') ou/et du premier tuyau d'entrée (38, 38'),
ou/et
- la forme de la section transversale ou/et de la taille de la section transversale d'un espace intermédiaire (46, 46') formé entre le tuyau de sortie (20, 20') et la zone d'extrémité de tuyau d'entrée (40, 40'),
ou/et
- la longueur de la zone d'extrémité du tuyau d'entrée (40, 40') s'étendant dans le tuyau de sortie (20, 20'),
ou/et
- la forme de la section transversale ou/et la taille de la section transversale du deuxième tuyau d'entrée (48, 48'),
ou/et
- le nombre de tuyaux d'extrémité de tuyaux de sortie (30, 32, 30'),
ou/et
- le nombre et/ou le positionnement et/ou la taille des ouvertures de passage (66) prévues dans une paroi de tuyau du tuyau de sortie (20, 20') et/ou dans une paroi de tuyau du premier tuyau d'entrée (38, 38').

12. Système d'échappement pour un moteur à combustion interne, comprenant un silencieux (12) selon l'une des revendications précédentes et, en association avec ledit au moins un groupe de tuyaux de gaz d'échappement (19, 19'), un système de conduits de gaz d'échappement (50, 50') envoyant les gaz d'échappement vers le premier tuyau d'entrée (38, 38') et vers le deuxième tuyau d'entrée (48, 48'),de préférence dans lequel un clapet d'échappement (60") est prévu dans le premier tuyau d'entrée (38, 38') dans au moins un et de préférence dans chaque groupe de tuyaux de gaz d'échappement (19, 19').

13. Système d'échappement selon la revendication 12, **caractérisé en ce que** dans au moins un et de préférence dans chaque groupe de tuyaux de gaz d'échappement (19, 19'), le système de conduits de gaz d'échappement (50, 50') comprend un clapet d'échappement (60, 60') en association avec le premier tuyau d'entrée (38, 38').

14. Système d'échappement selon la revendication 12 ou 13, **caractérisé en ce que** dans au moins un et de préférence dans chaque groupe de tuyaux de gaz d'échappement (19, 19'), le système de conduits de gaz d'échappement (50, 50') comprend une conduite principale de gaz d'échappement (52) et une première conduite de dérivation de gaz d'échappement (56, 56') menant à un point de ramification (54) de la conduite principale de gaz d'échappement (52) au premier tuyau d'entrée (38, 38') ainsi qu'une deuxième conduite de dérivation de gaz d'échappement (58, 58') menant de la conduite principale de gaz d'échappement (52) au deuxième tuyau d'entrée (48, 48'), de
préférence, le point de dérivation (54) comprenant un dispositif de régulation du débit de gaz d'échappement (64), le débit de gaz d'échappement dans la première conduite de dérivation de gaz d'échappement (56, 56') et le débit de gaz d'échappement dans la deuxième conduite de dérivation de gaz d'échappement (58, 58') pouvant être modifié par le dispositif de régulation du débit de gaz d'échappement (64)

15. Système d'échappement selon la revendication 13 et la revendication 14,
**caractérisé en ce que** le clapet d'échappement (60, 60') est prévu dans la première conduite de dérivation des gaz d'échappement (56, 56') dans au moins un et de préférence dans chaque groupe de conduites de gaz d'échappement (19, 19').
